# EUROPEAN PATENT SPECIFICATION

(11) **EP 4 195 071 B1**
(45) Date of publication and mention of the grant of the patent: **03.12.2025**
(21) Application number: 22202003.4
(22) Date of filing: 17.10.2022
(51) Int. Cl.: G06F 16/901, G06F 16/23

(54) **TRANSACTIONAL MULTI-VERSION CONTROL ENABLED UPDATE OF CACHED GRAPH INDICES**
DURCH TRANSAKTIONSSTEUERUNG MIT MEHREREN VERSIONEN AKTIVIERTE AKTUALISIERUNG VON GEPUFFERTEN GRAPHINDIZES
MISE À JOUR INTERACTIVE ACTIVÉE PAR UN CONTRÔLE MULTIVERSION D'INDICES DE GRAPHE MIS EN MÉMOIRE CACHE

(30) Priority: 10.12.2021 US 202117547686
(43) Date of publication of application: 14.06.2023
(73) Proprietor: SAP SE, 69190 Walldorf (DE)
(72) Inventor: SEDLER, Roland, 69190 Walldorf (DE); RAWAT, Umang, 69190 Walldorf (DE); HAUCK, Matthias, 69190 Walldorf (DE); JAKSCHITSCH, Hannes, 69190 Walldorf (DE); RITTER, Daniel, 69190 Walldorf (DE)
(74) Representative: Müller-Boré & Partner Patentanwälte PartG mbB

(56) References cited:
- US-A1- 2017 255 708
- US-A1- 2018 239 796
- ANONYMOUS: "Index-free adjacency", 26 August 2019 (2019-08-26), pages 1 - 4, XP093032580, Retrieved from the Internet <URL:https://web.archive.org/web/20190826114620/https://thomasvilhena.com/2019/08/index-free-adjacency> [retrieved on 20230317]

## Description

### TECHNICAL FIELD

The subject matter described herein relates generally to database processing and more specifically to the updating of cached graph indices.

### BACKGROUND

A database may be configured to store data in accordance with a database schema. For example, in a graph database, data may be represented and stored using graph structures including, for example, vertices, directed edges, undirected edges, and/or the like. Notably, the graph database may store the relationships between different data items explicitly. For instance, the vertices of a graph may correspond to the individual data items stored in the graph database while the edges of the graph may define the relationships between these data items. Attributes associated with the vertices and/or the edges may provide additional properties for the data items stored in the graph database and/or the relationships that exist between different data items. Contrastingly, a relational database may store the relationships between different data items implicitly, for example, by organizing the data items into one or more database tables. A relational database may be configured to store graph data, for example, by storing the vertices of a graph in a vertex table and the edges of the graph in a separate edge table.

US 2018/239796 A1 discloses a technique of using cache in a graph database.

### SUMMARY

The object of the invention is solved by the features of the independent claims. Further embodiments are the subject-matter of the dependent claims.

### DESCRIPTION OF DRAWINGS

The accompanying drawings, which are incorporated in and constitute a part of this specification, show certain aspects of the subject matter disclosed herein and, together with the description, help explain some of the principles associated with the disclosed implementations. In the drawings,
FIG. 1A depicts a system diagram illustrating an example of a graph data processing system, in accordance with some example embodiments;
FIG. 1B depicts a block diagram illustrating an example of a graph engine, in accordance with some example embodiments;
FIG. 2 depicts an example of graph data, in accordance with some example embodiments;
FIG. 3 depicts a sequence diagram illustrating an example of a process for updating a cached graph index, in accordance with some example embodiments;
FIG. 4 depicts a flowchart illustrating an example of a process for graph processing with an updatable graph index, in accordance with some example embodiments; and
FIG. 5 depicts a block diagram illustrating an example of a computing system, in accordance with some example embodiments.

When practical, similar reference numbers denote similar structures, features, or elements.

### DETAILED DESCRIPTION

A relational database storing graph data may support graph processing algorithms including, for example, shortest path, risk propagation, minimum flow, page rank, and/or the like. Efficient processing of graph data stored in a relational database may require the materialization of a graph index such as an adjacency structure (e.g., an adjacency list, an adjacency matrix, and/or the like) that enumerates, for example, the neighboring vertices of each vertex within a graph and/or the neighboring edges of each vertex within the graph. In some instances, the efficiency of processing graph data stored in the relational database may be further maximized by ensuring that the graph index contains only graph data that is visible to a current transaction. Excluding graph data that is invisible to the current transaction from the graph index may obviate visibility checks when the graph data is traversed to execute a graph processing algorithm.

In some example embodiments, the graph index may be cached such that the same graph index may be reused by multiple transactions with the same transactional visibility properties. Nevertheless, maintaining the currency of the graph index (e.g., to include only graph data that is visible to a current transaction) by rebuilding the graph index for each modification of the underlying graph data may consume excessive resources at least because a full rebuild of the graph index is a computationally expensive operation. As such, according to some example embodiments, a graph engine may be configured to update, based at least on transactional version data, a cached graph index to reflect modifications to the underlying graph data. For example, in response to a transaction at a first time *t*₁, the cached graph index from a second time *t*₂ (before or after the first time *t*₁) may be updated by applying (or rewinding) the changes made to the underlying graph data by one or more transactions between the first time *t*₁ and the second time *t*₂. Updating the cached graph index in this manner may maintain the currency of the cached graph index while avoiding a full rebuild of the cached graph index. In doing so, the

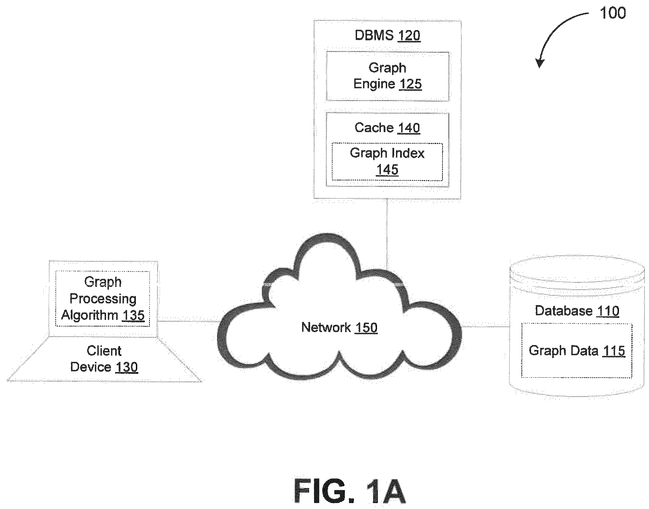

FIG. 1A depicts a system diagram illustrating an example of a graph data processing system 100, in accordance with some example embodiments. Referring to FIG. 1A, the graph data processing system 100 may include a database 110 storing a graph data 115, a database management system 120 including a graph engine 125, and a client device 130. The database 110, the database management system 120, and the client device 130 may be communicatively coupled via a network 150. It should be appreciated that the client device 130 may be a processor-based device including, for example, a smartphone, a tablet computer, a wearable apparatus, a virtual assistant, an Internet-of-Things (IoT) appliance, and/or the like. The network 150 may be a wired network and/or a wireless network including, for example, a public land mobile network (PLMN), a wide area network (WAN), a local area network (LAN), a virtual local area network (VLAN), the Internet, and/or the like.

The database 110 is a relational database configured to store the graph data 115, in one or more vertex tables and edge tables. The database management system 120 is configured to respond to requests to access the graph data 115 from one or more client devices including, for example, the client device 130. For example, as shown in FIG. 1A, the client device 130 may send, to the database management system 110, a request to execute a graph processing algorithm 135 that derives a solution by operating on the graph data 115 stored in the database 110.

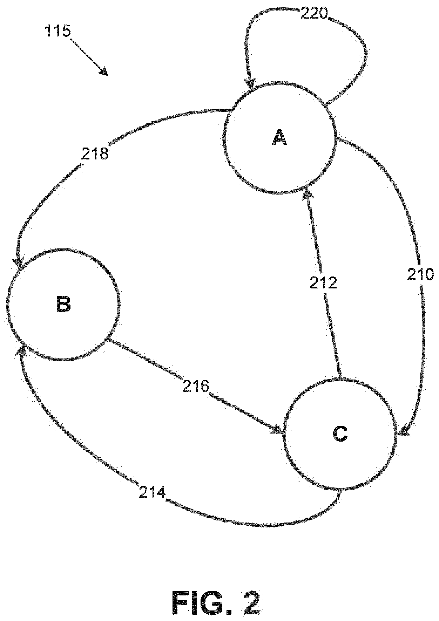

To further illustrate, FIG. 2 depicts an example of the graph data 115 stored in the database 115, for example, in a vertex table and an edge table. As shown in FIG. 2, the graph data 200 may include one or more vertices including, for example, a first vertex A, a second vertex B, and a third vertex C. Furthermore, the one or more vertices may be interconnected via one or more edges including, for example, a first edge 210, a second edge 212, a third edge 214, a fourth edge 216, a fifth edge 218, and a sixth edge 220. In the example of the graph data 115 shown in FIG. 2, the one or more edges are directed edges but it should be appreciated that the one or more edges may also be undirected edges interconnecting the one or more vertices.

The graph processing algorithm 135 may include one or more graph processing functions including, for example, subgraph, inverse graph, in-degree, out-degree, incoming edges, outgoing edges, neighbors, is-reachable, shortest path, shortest path one to all, k shortest paths, strongly connected components, depth first traversal, breadth first traversal, and/or the like. To increase the efficiency of executing the graph processing algorithm 135 on the graph data 115, the graph engine 125 may materialize a graph index 145. For example, the graph engine 125 may execute the graph processing algorithm 135 by traversing the graph data 115 based on the graph index 145. An adjacency structure, such as an adjacency list or an adjacency matrix, is one example of the graph index 145 that identifies a first vertex as being adjacent to a second vertex based at least on the first vertex being connected to the second vertex by one or more edges. In the example of the graph data 115 shown in FIG. 2, for example, the adjacency structure may identify the first vertex A as being adjacent to the second vertex B, the third vertex C, as well as the first vertex A itself.

The graph index 145 is in a cache 140, such that the same graph index 145 may be reused by multiple transactions. For example, in some cases, the cache 140 may store a binary representation of the graph index 145. The graph engine 125 may maintain the currency of the graph index 145 to ensure that the graph index 145 includes graph data that is visible to a current transaction and excludes graph data that is invisible to the current transaction. For instance, for a transaction executed at a first time *t*₁, the graph index 145 includes vertices and/or edges that have been inserted prior to the first time *t*₁ by one or more other transactions and are not deleted by a transaction until after the first time *t*₁. Furthermore, the graph index 145 excludes vertices and/or edges that have been deleted prior to the first time *t*₁ and/or inserted subsequent to the first time *t*₁ by one or more other transactions.

As used herein, the term "transaction" may refer to a database operation reading or writing data (e.g., at the database 110), executing a stored procedure, and/or executing a graph algorithm on the graph data 115 via the graph engine 125. Each transaction may have its own consistent view of the data stored at the database 110, for example, in accordance with one or more atomicity, consistency, isolation, and durability (ACID) rules imposed at the database 110.

Excluding graph data that is invisible to the current transaction from the graph index 145 may obviate visibility checks when the graph data 115 is traversed to execute the graph processing algorithm 135. However, maintaining the currency of the graph index 145 in the cache 140 by rebuilding the graph index 145 in its entirety each time the underlying graph data 115 is modified may consume excessive resources at least because a full rebuild of the graph index 145 is a computationally expensive operation. As such, in some example embodiments, the graph engine 125 may update, based at least on transactional version data, the cached graph index 145 to reflect modifications to the underlying graph data. Accordingly, in response to the transaction being executed at the first time *t*₁, the cached graph index 145 from a second time *t*₂ (before or after the first time *t*₁) is updated by applying (or rewinding) the changes associated with the one or more other transactions that modified the underlying graph data 115 between the first time *t*₁ and the second time *t*₂, for example, by inserting and/or deleting one or more vertices and/or edges from the graph data 115. Updating the cached graph index 145 in this manner may maintain the currency of the cached graph index 145 while avoiding a full rebuild of the cached graph index 145.

The database management system 120 may implement multi-version concurrency control (MVCC) in order to support multiple concurrent transactions without imposing read-write locks. Alternatively, the database management system may track previous version of the graph data 115, for example, by maintaining a redo log. In doing so, the database management system 120 may maintain one or more logs of transactions operating on the graph data 115, for example, by inserting and/or deleting one or more vertices and/or edges from the graph data 115. As such, in response to the transaction being executed at the first time *t*₁, the cached graph index 145 from a second time *t*₂ (before or after the first time *t*₁) may be updated by applying (or rewinding) the logged changes associated with the one or more other transactions that modified the underlying graph data 115 between the first time *t*₁ and the second time *t*₂.

The updating of the cached graph index 145 may include the adjustment of cache entries, e.g., the removal of the old cache entry for the graph index chosen for update and the creation of a new cache entry with updated transactional visibility settings. For instance, in response to executing the transaction at the second time *t*₂ after the first time *t*₁, the cached version of the graph index 145 from the first time *t*₁ may be removed from the cache and replaced with an updated version of the graph index 145. The updated version of the graph index 145 may include graph data that is visible to the transaction executed at the first time *t*₁ including, for example, vertices and/or edges that have been inserted prior to the first time *t*₁ and are not deleted by a transaction until after the first time *t*₁ (e.g., data associated with transactions committed prior to the first time *t*₁). Moreover, the updated version of the graph index 145 may exclude vertices and/or edges that have been deleted after the first time *t*₁ and prior to the second time *t*₂ and/or inserted subsequent after the first time *t*₁ by one or more other transactions and prior to the second time *t*₂ (e.g., data associated with transactions committed between the first time *t*₁ and the second time *t*₂).

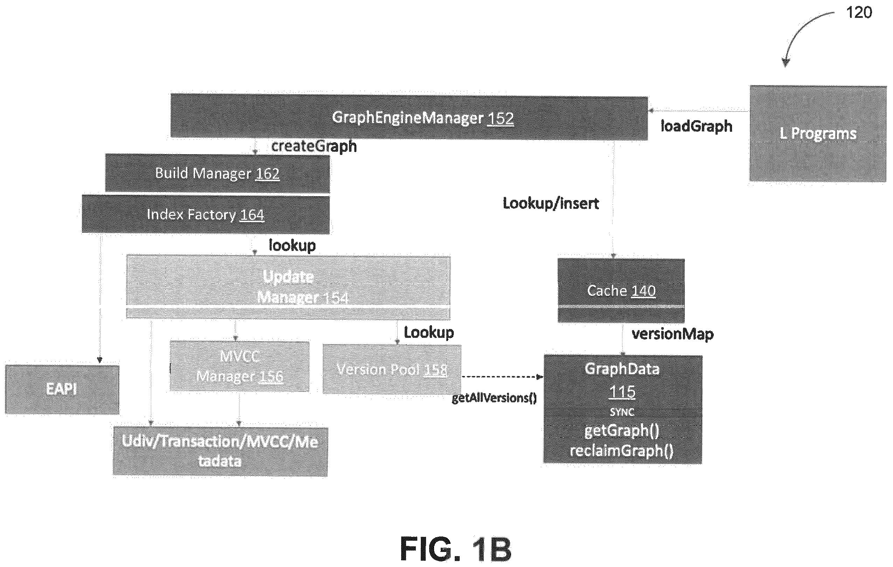

FIG. 1B depicts a block diagram illustrating an example of the graph engine 125, in accordance with some example embodiments. Referring to FIGS. 1A-B, the graph engine 125 may include a graph engine manager 152, which may respond to a request to load a graph by sending, to a build manager 162, a corresponding request to create a graph index. In the example of the graph engine 125 shown in FIG. 1B, the graph engine 125 may include an update manager 154, which may interact with a multi-version currency control (MVCC) manager 156 and a version pool 158 to update, based at least on the transactions modifying the graph data 115 in the database 110, the graph index 145 stored in the cache 140. Updating the graph index 145 in this manner may provide a variety of advantages. For example, recycling obsolete versions of the graph index 145 may minimize the memory footprint associated with the cache 140 by at least limiting the quantity of copies of the graph index 145 to the quantity of concurrent transactions having different visibility into the graph data 115. Updating the graph index 145 is also a more computationally efficient operation than a full rebuild of the graph index 145. As such, the runtime of transactions may be greatly reduced by avoiding a full rebuild of the graph index 145 whenever possible. Finally, the updating of the graph index 145 may be realized without a central graph index with dynamic transactional capabilities, an implementation that requires maintaining an extremely complicated data structure, additional transactional visibility checks for each transaction, and complicated management for avoiding race conditions during concurrent modifications to the graph data 115.

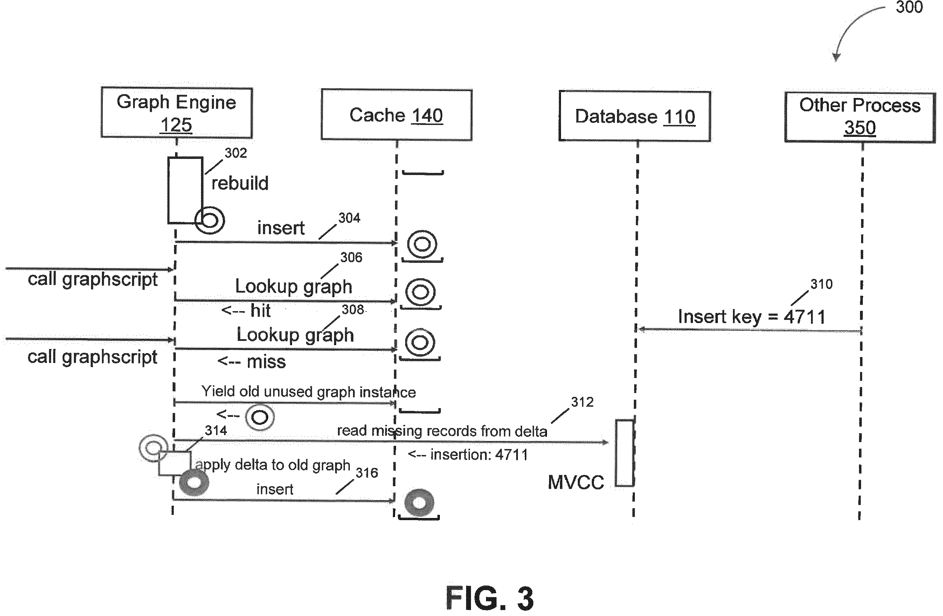

FIG. 3 depicts a sequence diagram illustrating an example of a process 300 for updating a cached graph index, in accordance with some example embodiments. Referring to FIGS. 1A-B and 3, the process 300 may be performed in order to update, based at least on the transactions modifying the graph data 115 in the database 110, the graph index 145 stored in the cache 140.

As shown in FIG. 3, at 302, the graph engine 125 may generate, based at least on the graph data 115, the graph index 145. In some cases, the graph index 145 may be an adjacency structure (e.g., an adjacency list, an adjacency matrix, and/or the like) that enumerates, for example, the neighboring vertices of each vertex within the graph data 115 and/or the neighboring edges of each edge within the graph data 115. At 304, the graph engine 125 may insert, into the cache 140, the graph index 115. For example, in some example embodiments, the cache 140 may store a binary representation of the graph index 145.

At 306, the graph engine 125 respond to a first graph script call by accessing the cache 140. For example, the first graph script call may execute, on the graph data 115, the graph processing algorithm 135. In the event the transactions of the graph processing algorithm 135 accesses graph data present the graph index 145 in the cache 140, the graph engine 125 may reuse the graph index 145 to execute the graph processing algorithm 135, for example, by traversing the graph data 115 based on the graph index 145. Alternatively, at 308, the graph engine 125 may respond to a second graph script call by accessing the cache 140. However, in this case, another process 350 may have modified the graph data 115 such that executing the graph processing algorithm 135 on the graph data 115 may access graph data absent from the graph index 145 in the cache 140. For example, at 310, another process 350 may modify the graph data 115 by inserting and/or deleting one or more vertices and/or edges from the graph data 115 (e.g., "insert key = 4711"). Alternatively, at 310, another process 350 may modify the graph data 115 may updating the attributes of one or more vertices and/or the attributes of one more edges included in the graph data 115. As such, the graph engine 125 accessing the graph index 145 subsequent to the modification of the underlying graph data 115 may trigger a cache miss.

It should be appreciated that any modification to the underlying graph data 115 may trigger a cache miss for a subsequent read transaction, independent of the vertices or edges the read transaction accesses (or attempts to access). Entries in the cache 140, such as the graph index 145, are created with transactional visibility information (that is active at the point of cache entry creation) as well as additional version information about the corresponding database tables (also as active at the time of cache entry creation). As such, when a database table is modified (e.g., through modification of the graph data 115), its version information is changed by the database 110. At query time, the cache framework may use the information about transactional visibility and table state to find out if the cache entry fits the transactional context of the current transaction.

At 312, in response to the cache miss, the graph engine 125 may determine a delta between a first state of the graph data 115 associated with the version of the graph index 145 in the cache 140 and a second state of the graph data 115 at the database 110. Moreover, at 314, the graph engine 125 may update the graph index 145 based on the delta. For example, the second graph script call may be received at a first time *t*₁ while the cached graph index 145 may be from a second time *t*₂ (before or after the first time *t*₁). Accordingly, the graph engine 125 may update the version of the graph index 145 in the cache 140 by applying (or rewinding) the changes associated with the one or more other transactions that modified the underlying graph data 115 between the first time *t*₁ and the second time *t*₂, for example, by inserting and/or deleting one or more vertices and/or edges from the graph data 115. At 316, the graph engine 125 may replace the version of the graph index 145 in the cache 140 with the updated version of the graph index 145.

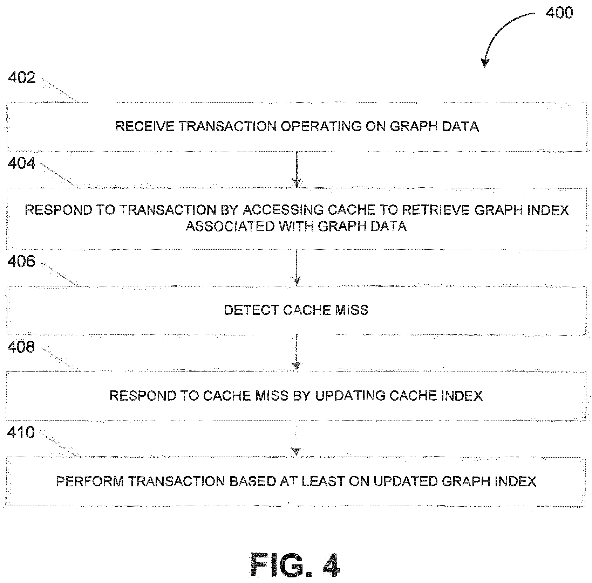

FIG. 4 depicts a flowchart illustrating an example of a process 400 for graph processing with an updatable graph index, in accordance with some example embodiments. Referring to FIGS. 1A-B and 3-4, the process 400 may be performed by the database management system 120, for example, the graph engine 125, in response to a request from the client device 130 to execute the graph processing algorithm 135 on the graph data 115 stored in the database 110.

At 402, the graph engine 125 may receive a transaction operating on a graph data. For example, the graph engine 125 may receive, from the client device 130, a request to execute a transaction that includes performing the graph processing algorithm 135 on the graph data 115 stored in the database 110. The graph processing algorithm 135 may include one or more graph processing functions including, for example, subgraph, inverse graph, in-degree, out-degree, incoming edges, outgoing edges, neighbors, is-reachable, shortest path, shortest path one to all, *k* shortest paths, strongly connected components, depth first traversal, breadth first traversal, and/or the like.

At 404, the graph engine 125 may respond to the transaction by accessing a cache to retrieve a graph index associated with the graph data. In some example embodiments, the graph engine 125 may generate the graph index 145 in order to increase the efficiency of executing the graph processing algorithm 135 on the graph data 115. The graph index 145 may be, for example, an adjacency structure (e.g., an adjacency list, an adjacency matrix, and/or the like) that identifies a first vertex as being adjacent to a second vertex based at least on the first vertex being connected to the second vertex by one or more edges.

At 406, the graph engine 125 may detect a cache miss. In some cases, the version of the graph index 145 stored in the cache 145 may not be current at least because one or more other transactions may be have modified the underlying graph data 115, for example, by inserting and/or deleting one or more vertices and/or edges from the graph data 115.

At 408, the graph engine 125 may respond to the cache miss by updating the graph index. In some example embodiments, the graph engine 125 may maintain the currency of the graph index 145 by updating the graph index 145 instead of rebuilding the graph index 145 in its entirety. For example, in response to the cache miss triggered by the transaction executed at the first time *t*₁, the graph engine 125 may update the cached graph index 145 from a second time *t*₂ (before or after the first time *t*₁) by applying (or rewinding) the changes made to the underlying graph data 115 by one or more other transactions between the first time *t*₁ and the second time *t*₂.

At 410, the graph engine 125 may perform, based at least on the updated graph index, the transaction. In some example embodiments, the graph engine 125 may perform the transaction, for example, by traversing at least a portion of the graph data 115 based on the updated graph index 145.

In view of the above-described implementations of subject matter this application discloses the following list of examples, wherein one feature of an example in isolation or more than one feature of said example taken in combination and, optionally, in combination with one or more features of one or more further examples are further examples also falling within the disclosure of this application:
Example 1: A system, comprising: at least one data processor; and at least one memory storing instructions, which when executed by the at least one data processor, result in operations comprising: in response to a transaction operating on a graph data stored in a database, accessing a cache storing a graph index corresponding to the graph data; in response to detecting a cache miss, updating the graph index by at least replaying or rewinding one or more changes made to the graph data by one or more other transactions between a first time of the transaction and a second time of a current version of the graph index in the cache; and executing, based at least on the updated graph index, the transaction.
Example 2: The system of example 1, wherein the executing of the transaction includes performing, based at least on the updated graph index, a graph processing algorithm comprising one or more of subgraph, inverse graph, in-degree, out-degree, incoming edges, outgoing edges, neighbors, is-reachable, shortest path, shortest path one to all, *k* shortest paths, strongly connected components, depth first traversal, or breadth first traversal.
Example 3: The system of any one of examples 1 to 2, wherein the graph index comprises an adjacency structure identifying a first vertex as being adjacent to a second vertex based at least on the first vertex being connected to the second vertex by one or more edges.
Example 4: The system of any one of examples 1 to 3, wherein the one or more other transactions modified the graph data by at least inserting a vertex, deleting a vertex, inserting an edge, and/or deleting an edge.
Example 5: The system of any one of examples 1 to 4, wherein the cache miss is triggered by a modification to the graph data stored in the database.
Example 6: The system of any one of examples 1 to 5, wherein the operations further include: performing a multi-version concurrency control (MVCC) to track a plurality of transactions modifying the graph data stored in the database.
Example 7: The system of any one of examples 1 to 6, wherein the operations further include: maintaining a redo log tracking a plurality of changes made to the graph data stored at the database; and reading the redo log in order to replay or rewind the one or more changes made to the graph data between the first time of the transaction and the second time of the current version of the graph index.
Example 8: The system of any one of examples 1 to 7, wherein the database comprises a relational database that stores the graph data one or more vertex tables and edge tables.
Example 9: The system of example 8, wherein the operations further include: generating, based at least on the one or more vertex tables and edge tables, the graph index.
Example 10: The system of any one of examples 1 to 9, wherein the database comprises a document store.
Example 11: The system of any one of examples 1 to 10, wherein the graph index is updated without rebuilding the graph index in its entirety.
Example 12: The system of any one of examples 1 to 11, wherein the updating of the graph index further includes replacing the current version of the graph index in the cache with the updated graph index.
Example 13: A computer-implemented method, comprising: in response to a transaction operating on a graph data stored in a database, accessing a cache storing a graph index corresponding to the graph data; in response to detecting a cache miss, updating the graph index by at least replaying or rewinding one or more changes made to the graph data by one or more other transactions between a first time of the transaction and a second time of a current version of the graph index in the cache; and executing, based at least on the updated graph index, the transaction.
Example 14: The method of example 13, wherein the executing of the transaction includes performing, based at least on the updated graph index, a graph processing algorithm comprising one or more of subgraph, inverse graph, in-degree, out-degree, incoming edges, outgoing edges, neighbors, is-reachable, shortest path, shortest path one to all, k shortest paths, strongly connected components, depth first traversal, or breadth first traversal.
Example 15: The method of any one of examples 13 to 14, wherein the graph index comprises an adjacency structure identifying a first vertex as being adjacent to a second vertex based at least on the first vertex being connected to the second vertex by one or more edges.
Example 16: The method of any one of examples 13 to 15, wherein the one or more other transactions modified the graph data by at least inserting a vertex, deleting a vertex, inserting an edge, and/or deleting an edge.
Example 17: The method of any one of examples 13 to 16, wherein the cache miss is triggered by a modification to the graph data stored in the database.
Example 18: The method of any one of examples 13 to 17, further comprising: performing a multi-version concurrency control (MVCC) to track a plurality of transactions modifying the graph data stored in the database.
Example 19: The method of any one of examples 13 to 18, further comprising: maintaining a redo log tracking a plurality of changes made to the graph data stored at the database; and reading the redo log in order to replay or rewind the one or more changes made to the graph data between the first time of the transaction and the second time of the current version of the graph index.
Example 20: A non-transitory computer readable medium storing instructions, which when executed by at least one data processor, result in operations comprising: in response to a transaction operating on a graph data stored in a database, accessing a cache storing a graph index corresponding to the graph data; in response to detecting a cache miss, updating the graph index by at least replaying or rewinding one or more changes made to the graph data by one or more other transactions between a first time of the transaction and a second time of a current version of the graph index in the cache; and executing, based at least on the updated graph index, the transaction.

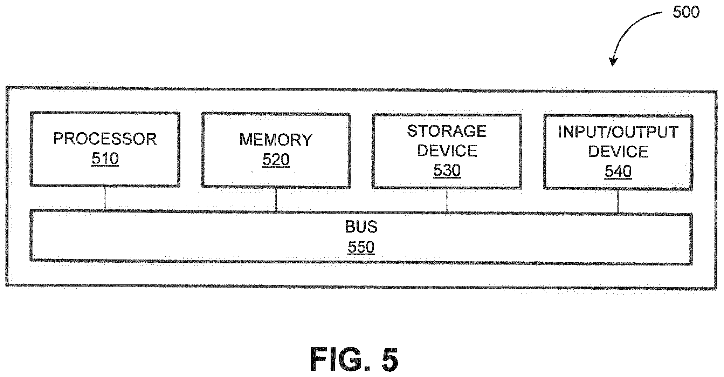

FIG. 5 depicts a block diagram illustrating an example of a computing system 500 consistent with implementations of the current subject matter. Referring to FIGS. 1A-B and 5, the computing system 500 can be used to implement the database management system 110 and/or any components therein.

As shown in FIG. 5, the computing system 500 can include a processor 510, a memory 520, a storage device 530, and an input/output device 540. The processor 510, the memory 520, the storage device 530, and the input/output device 540 can be interconnected via a system bus 550. The processor 510 is capable of processing instructions for execution within the computing system 500. Such executed instructions can implement one or more components of, for example, the database management system 110. In some example embodiments, the processor 510 can be a single-threaded processor. Alternately, the processor 510 can be a multi-threaded processor. The processor 510 is capable of processing instructions stored in the memory 520 and/or on the storage device 530 to display graphical information for a user interface provided via the input/output device 540.

The memory 520 is a computer readable medium such as volatile or non-volatile that stores information within the computing system 500. The memory 520 can store data structures representing configuration object databases, for example. The storage device 530 is capable of providing persistent storage for the computing system 500. The storage device 530 can be a solid state drive, a floppy disk device, a hard disk device, an optical disk device, or a tape device, or other suitable persistent storage means. The input/output device 540 provides input/output operations for the computing system 500. In some example embodiments, the input/output device 540 includes a keyboard and/or pointing device. In various implementations, the input/output device 540 includes a display unit for displaying graphical user interfaces.

According to some example embodiments, the input/output device 540 can provide input/output operations for a network device. For example, the input/output device 540 can include Ethernet ports or other networking ports to communicate with one or more wired and/or wireless networks (e.g., a local area network (LAN), a wide area network (WAN), the Internet).

In some example embodiments, the computing system 500 can be used to execute various interactive computer software applications that can be used for organization, analysis and/or storage of data in various formats. Alternatively, the computing system 500 can be used to execute any type of software applications. These applications can be used to perform various functionalities, e.g., planning functionalities (e.g., generating, managing, editing of spreadsheet documents, word processing documents, and/or any other objects, etc.), computing functionalities, communications functionalities, etc. The applications can include various add-in functionalities or can be standalone computing products and/or functionalities. Upon activation within the applications, the functionalities can be used to generate the user interface provided via the input/output device 540. The user interface can be generated and presented to a user by the computing system 500 (e.g., on a computer screen monitor, etc.).

One or more aspects or features of the subject matter described herein can be realized in digital electronic circuitry, integrated circuitry, specially designed ASICs, field programmable gate arrays (FPGAs) computer hardware, firmware, software, and/or combinations thereof. These various aspects or features can include implementation in one or more computer programs that are executable and/or interpretable on a programmable system including at least one programmable processor, which can be special or general purpose, coupled to receive data and instructions from, and to transmit data and instructions to, a storage system, at least one input device, and at least one output device. The programmable system or computing system may include clients and servers. A client and server are generally remote from each other and typically interact through a communication network. The relationship of client and server arises by virtue of computer programs running on the respective computers and having a client-server relationship to each other.

These computer programs, which can also be referred to as programs, software, software applications, applications, components, or code, include machine instructions for a programmable processor, and can be implemented in a high-level procedural and/or object-oriented programming language, and/or in assembly/machine language. As used herein, the term "machine-readable medium" refers to any computer program product, apparatus and/or device, such as for example magnetic discs, optical disks, memory, and Programmable Logic Devices (PLDs), used to provide machine instructions and/or data to a programmable processor, including a machine-readable medium that receives machine instructions as a machine-readable signal. The term "machine-readable signal" refers to any signal used to provide machine instructions and/or data to a programmable processor. The machine-readable medium can store such machine instructions non-transitorily, such as for example as would a non-transient solid-state memory or a magnetic hard drive or any equivalent storage medium. The machine-readable medium can alternatively or additionally store such machine instructions in a transient manner, such as for example, as would a processor cache or other random query memory associated with one or more physical processor cores.

To provide for interaction with a user, one or more aspects or features of the subject matter described herein can be implemented on a computer having a display device, such as for example a cathode ray tube (CRT) or a liquid crystal display (LCD) or a light emitting diode (LED) monitor for displaying information to the user and a keyboard and a pointing device, such as for example a mouse or a trackball, by which the user may provide input to the computer. Other kinds of devices can be used to provide for interaction with a user as well. For example, feedback provided to the user can be any form of sensory feedback, such as for example visual feedback, auditory feedback, or tactile feedback; and input from the user may be received in any form, including acoustic, speech, or tactile input. Other possible input devices include touch screens or other touch-sensitive devices such as single or multi-point resistive or capacitive track pads, voice recognition hardware and software, optical scanners, optical pointers, digital image capture devices and associated interpretation software, and the like.

In the descriptions above and in the claims, phrases such as "at least one of" or "one or more of" may occur followed by a conjunctive list of elements or features. The term "and/or" may also occur in a list of two or more elements or features. Unless otherwise implicitly or explicitly contradicted by the context in which it used, such a phrase is intended to mean any of the listed elements or features individually or any of the recited elements or features in combination with any of the other recited elements or features. For example, the phrases "at least one of A and B;" "one or more of A and B;" and "A and/or B" are each intended to mean "A alone, B alone, or A and B together." A similar interpretation is also intended for lists including three or more items. For example, the phrases "at least one of A, B, and C;" "one or more of A, B, and C;" and "A, B, and/or C" are each intended to mean "A alone, B alone, C alone, A and B together, A and C together, B and C together, or A and B and C together." Use of the term "based on," above and in the claims is intended to mean, "based at least in part on," such that an unrecited feature or element is also permissible.

The subject matter described herein can be embodied in systems, apparatus, methods, and/or articles depending on the desired configuration. The implementations set forth in the foregoing description do not represent all implementations consistent with the subject matter described herein. Instead, they are merely some examples consistent with aspects related to the described subject matter. Although a few variations have been described in detail above, other modifications or additions are possible. In particular, further features and/or variations can be provided in addition to those set forth herein. For example, the implementations described above can be directed to various combinations and subcombinations of the disclosed features and/or combinations and subcombinations of several further features disclosed above. In addition, the logic flows depicted in the accompanying figures and/or described herein do not necessarily require the particular order shown, or sequential order, to achieve desirable results. Other implementations may be within the scope of the following claims.

## Claims

1. A system, comprising:
at least one data processor; and
at least one memory storing instructions which, when executed by the at least one data processor, result in operations comprising:
generating, based at least on one or more vertex tables and edge tables of a database (110), a graph index, wherein the database (110) comprises a relational database that stores graph data (115) of the one or more vertex tables and edge tables,
in response to a transaction operating on the graph data (115) stored in the database (110), accessing (404) a cache (140) storing the graph index, wherein the graph index corresponds to the graph data (115);
in response to detecting a cache miss, updating (408) the graph index by at least replaying or rewinding one or more changes made to the graph data (115) by one or more other transactions between a first time of the transaction and a second time of a current version of the graph index in the cache (140),
wherein, for the transaction, the updated graph index includes vertices and/or edges that have been inserted prior to the first time by the one or more other transactions and are not deleted by a transaction until after the first time,
wherein the updated graph index excludes vertices and/or edges that have been deleted prior to the first time and/or inserted subsequent to the first time by the one or more other transactions, such that the transaction has a consistent view of the data stored at the database (110) in accordance with atomicity, consistency, isolation and durability rules imposed by the database (110); and
executing (410), based at least on the updated graph index, the transaction.

2. The system of claim 1, wherein the executing of the transaction includes performing, based at least on the updated graph index, a graph processing algorithm comprising one or more of subgraph, inverse graph, in-degree, out-degree, incoming edges, outgoing edges, neighbors, is-reachable, shortest path, shortest path one to all, k shortest paths, strongly connected components, depth first traversal, or breadth first traversal.

3. The system of any one of the preceding claims, wherein the graph index comprises an adjacency structure identifying a first vertex as being adjacent to a second vertex based at least on the first vertex being connected to the second vertex by one or more edges.

4. The system of any one of the preceding claims, wherein the one or more other transactions modified the graph data (115) by at least inserting a vertex, deleting a vertex, inserting an edge, and/or deleting an edge, and/or
wherein the cache miss is triggered by a modification to the graph data (115) stored in the database (110).

5. The system of any one of the preceding claims, wherein the operations further comprise:
performing a multi-version concurrency control (MVCC) to track a plurality of transactions modifying the graph data (115) stored in the database (110).

6. The system of any one of the preceding claims, wherein the operations further comprise:
maintaining a redo log tracking a plurality of changes made to the graph data (115) stored at the database (110); and
reading the redo log in order to replay or rewind the one or more changes made to the graph data (115) between the first time of the transaction and the second time of the current version of the graph index.

7. The system of any one of the preceding claims, wherein the database (110) comprises a document store, and/or
wherein the graph index is updated without rebuilding the graph index in its entirety, and/or
wherein the updating of the graph index further includes replacing the current version of the graph index in the cache (140) with the updated graph index.

8. A computer-implemented method, comprising:
generating, based at least on one or more vertex tables and edge tables of a database (110), a graph index, wherein the database (110) comprises a relational database that stores graph data (115) of the one or more vertex tables and edge tables,
in response to a transaction operating on the graph data (115) stored in the database (110), accessing (404) a cache (140) storing the graph index, wherein the graph index corresponds to the graph data (115);
in response to detecting a cache miss, updating (408) the graph index by at least replaying or rewinding one or more changes made to the graph data (115) by one or more other transactions between a first time of the transaction and a second time of a current version of the graph index in the cache (140),
wherein, for the transaction, the updated graph index includes vertices and/or edges that have been inserted prior to the first time by the one or more other transactions and are not deleted by a transaction until after the first time,
wherein the updated graph index excludes vertices and/or edges that have been deleted prior to the first time and/or inserted subsequent to the first time by the one or more other transactions, such that the transaction has a consistent view of the data stored at the database (110) in accordance with atomicity, consistency, isolation and durability rules imposed by the database (110); and
executing (410), based at least on the updated graph index, the transaction.

9. The method of claim 8, wherein the executing of the transaction includes performing, based at least on the updated graph index, a graph processing algorithm comprising one or more of subgraph, inverse graph, in-degree, out-degree, incoming edges, outgoing edges, neighbors, is-reachable, shortest path, shortest path one to all, k shortest paths, strongly connected components, depth first traversal, or breadth first traversal..

10. The method of claim 8 or 9, wherein the graph index comprises an adjacency structure identifying a first vertex as being adjacent to a second vertex based at least on the first vertex being connected to the second vertex by one or more edges.

11. The method of any one of the preceding claims 8 to 10, wherein the one or more other transactions modified the graph data (115) by at least inserting a vertex, deleting a vertex, inserting an edge, and/or deleting an edge, and/or
wherein the cache miss is triggered by a modification to the graph data (115) stored in the database (110).

12. The method of any one of the preceding claims 8 to 11, further comprising:
performing a multi-version concurrency control (MVCC) to track a plurality of transactions modifying the graph data (115) stored in the database (110).

13. The method of any one of the preceding claims 8 to 12, further comprising:
maintaining a redo log tracking a plurality of changes made to the graph data (115) stored at the database (110); and
reading the redo log in order to replay or rewind the one or more changes made to the graph data (115) between the first time of the transaction and the second time of the current version of the graph index.

14. A computer program product, particularly embodied as a non-transitory computer readable medium, comprising instructions, which when executed by at least one data processor, result in operations according to a method according to any one of the preceding claims 8 to 13.

## Patentansprüche

1. System, umfassend:
mindestens einen Datenprozessor; und
mindestens einen Speicher, der Anweisungen speichert, die, wenn sie durch den mindestens einen Datenprozessor ausgeführt werden, zu Vorgängen führen, umfassend:
Erzeugen, auf der Basis von mindestens einer oder mehreren Knotentabelle(n) und Kantentabelle(n) einer Datenbank (110), eines Graphenindex, wobei die Datenbank (110) eine relationale Datenbank umfasst, die Graphendaten (115) der einen oder mehreren Knotentabelle(n) und Kantentabelle(n) speichert,
als Reaktion auf eine Transaktion, die mit den Graphendaten (115) durchgeführt wird, die in der Datenbank (110) gespeichert sind, Zugreifen (404) auf einen Cache (140), der den Graphenindex speichert, wobei der Graphenindex den Graphendaten (115) entspricht;
als Reaktion auf das Erfassen eines Cache-Fehltreffers, Aktualisieren (408) des Graphenindex durch mindestens erneutes Ausführen oder Rückgängigmachen einer oder mehrerer Änderung(en), die mit den Graphendaten (115) durch eine oder mehrere weitere Transaktion(en) zwischen einem ersten Mal der Transaktion und einem zweiten Mal einer aktuellen Version des Graphenindex in dem Cache (140) durchgeführt worden ist/sind,
wobei, für die Transaktion, der aktualisierte Graphenindex Knoten und/oder Kanten umfasst, die vor dem ersten Mal durch die eine oder mehreren weiteren Transaktion(en) insertiert worden sind und durch eine Transaktion bis nach dem ersten Mal nicht gelöscht werden,
wobei der aktualisierte Graphenindex Knoten und/oder Kanten ausschließt, die vor dem ersten Mal gelöscht worden sind und/oder anschließend an das erste Mal durch die eine oder mehreren weiteren Transaktion(en) insertiert worden sind, so dass die Transaktion eine konsistente Ansicht der Daten aufweist, die bei der Datenbank (110) gemäß Atomizitäts-, Konsistenz-, Isolations- und Beständigkeitsregeln, die durch die Datenbank (110) auferlegt werden; und
Ausführen (410), auf der Basis mindestens des aktualisierten Graphenindex, der Transaktion.

2. System nach Anspruch 1, wobei das Ausführen der Transaktion das Durchführen, mindestens auf der Basis des aktualisierten Graphenindex, eines Graphenverarbeitungsalgorithmus umfasst, der eines oder mehrere von Teilgraph, inverser Graph, Innengrad, Außengrad, eingehende Kanten, ausgehende Kanten, Nachbarn, isterreichbar, kürzester Weg, kürzester Weg einer zu allen, k kürzeste Wege, fest verbundene Komponenten, Tiefensuche oder Breitensuche umfasst.

3. System nach einem der vorhergehenden Ansprüche, wobei der Graphenindex eine Adjazenzstruktur umfasst, die einen ersten Knoten als benachbart zu einem zweiten Knoten auf der Basis mindestens des ersten Knotens, der mit dem zweiten Knoten durch eine oder mehrere Kante(n) verbunden ist, identifiziert.

4. System nach einem der vorhergehenden Ansprüche, wobei die eine oder mehreren weitere(n) Transaktion(en) die Graphendaten (115) durch mindestens Insertieren eines Knotens, Löschen eines Knotens, Insertieren einer Kante und/oder Löschen einer Kante modifiziert hat, und/oder
wobei der Cache-Fehltreffer durch eine Modifizierung der Graphendaten (115), die in der Datenbank (110) gespeichert sind, ausgelöst wird.

5. System nach einem der vorhergehenden Ansprüche, wobei die Vorgänge ferner umfassen:
Durchführen einer "Multi-Version Concurrency Control" (MVCC) zum Verfolgen einer Mehrzahl von Transaktionen, welche die Graphendaten (115) modifizieren, die in der Datenbank (110) gespeichert sind.

6. System nach einem der vorhergehenden Ansprüche, wobei die Vorgänge ferner umfassen:
Aufrechterhalten eines Redo-Protokolls, das eine Mehrzahl von Änderungen verfolgt, die mit den Graphendaten (115) durchgeführt worden sind, die in der Datenbank (110) gespeichert sind; und
Lesen des Redo-Protokolls zum erneuten Ausführen oder Rückgängigmachen der einen oder mehreren Änderung(en), die mit den Graphendaten (115) zwischen dem ersten Mal der Transaktion und dem zweiten Mal der aktuellen Version des Graphenindex durchgeführt worden ist/sind.

7. System nach einem der vorhergehenden Ansprüche, wobei die Datenbank (110) einen Dokumentenspeicher umfasst, und/oder
wobei der Graphenindex ohne erneutes Erstellen des Graphenindex in dessen Gesamtheit aktualisiert wird, und/oder
wobei das Aktualisieren des Graphenindex ferner das Ersetzen der aktuellen Version des Graphenindex in dem Cache (140) mit dem aktualisierten Graphenindex umfasst.

8. Computerimplementiertes Verfahren, umfassend:
Erzeugen, auf der Basis von mindestens einer oder mehreren Knotentabelle(n) und Kantentabelle(n) einer Datenbank (110), eines Graphenindex, wobei die Datenbank (110) eine relationale Datenbank umfasst, die Graphendaten (115) der einen oder mehreren Knotentabelle(n) und Kantentabelle(n) speichert,
als Reaktion auf eine Transaktion, die mit den Graphendaten (115) durchgeführt wird, die in der Datenbank (110) gespeichert sind, Zugreifen (404) auf einen Cache (140), der den Graphenindex speichert, wobei der Graphenindex den Graphendaten (115) entspricht;
als Reaktion auf das Erfassen eines Cache-Fehltreffers, Aktualisieren (408) des Graphenindex durch mindestens erneutes Ausführen oder Rückgängigmachen einer oder mehrerer Änderung(en), die mit den Graphendaten (115) durch eine oder mehrere weitere Transaktion(en) zwischen einem ersten Mal der Transaktion und einem zweiten Mal einer aktuellen Version des Graphenindex in dem Cache (140) durchgeführt worden ist/sind,
wobei, für die Transaktion, der aktualisierte Graphenindex Knoten und/oder Kanten umfasst, die vor dem ersten Mal durch die eine oder mehreren weiteren Transaktion(en) insertiert worden sind und durch eine Transaktion bis nach dem ersten Mal nicht gelöscht werden,
wobei der aktualisierte Graphenindex Knoten und/oder Kanten ausschließt, die vor dem ersten Mal gelöscht worden sind und/oder anschließend an das erste Mal durch die eine oder mehreren weiteren Transaktion(en) insertiert worden sind, so dass die Transaktion eine konsistente Ansicht der Daten aufweist, die bei der Datenbank (110) gemäß Atomizitäts-, Konsistenz-, Isolations- und Beständigkeitsregeln, die durch die Datenbank (110) auferlegt werden; und
Ausführen (410), auf der Basis mindestens des aktualisierten Graphenindex, der Transaktion.

9. Verfahren nach Anspruch 8, wobei das Ausführen der Transaktion das Durchführen, mindestens auf der Basis des aktualisierten Graphenindex, eines Graphenverarbeitungsalgorithmus umfasst, der eines oder mehrere von Teilgraph, inverser Graph, Innengrad, Außengrad, eingehende Kanten, ausgehende Kanten, Nachbarn, isterreichbar, kürzester Weg, kürzester Weg einer zu allen, k kürzeste Wege, fest verbundene Komponenten, Tiefensuche oder Breitensuche umfasst.

10. Verfahren nach Anspruch 8 oder 9, wobei der Graphenindex eine Adjazenzstruktur umfasst, die einen ersten Knoten als benachbart zu einem zweiten Knoten auf der Basis mindestens des ersten Knotens, der mit dem zweiten Knoten durch eine oder mehrere Kante(n) verbunden ist, identifiziert.

11. Verfahren nach einem der vorhergehenden Ansprüche 8 bis 10, wobei die eine oder mehreren weitere(n) Transaktion(en) die Graphendaten (115) durch mindestens Insertieren eines Knotens, Löschen eines Knotens, Insertieren einer Kante und/oder Löschen einer Kante modifiziert hat, und/oder
wobei der Cache-Fehltreffer durch eine Modifizierung der Graphendaten (115), die in der Datenbank (110) gespeichert sind, ausgelöst wird.

12. Verfahren nach einem der vorhergehenden Ansprüche 8 bis 11, ferner umfassend:
Durchführen einer "Multi-Version Concurrency Control" (MVCC) zum Verfolgen einer Mehrzahl von Transaktionen, welche die Graphendaten (115) modifizieren, die in der Datenbank (110) gespeichert sind.

13. Verfahren nach einem der vorhergehenden Ansprüche 8 bis 12, ferner umfassend:
Aufrechterhalten eines Redo-Protokolls, das eine Mehrzahl von Änderungen verfolgt, die mit den Graphendaten (115) durchgeführt worden sind, die in der Datenbank (110) gespeichert sind; und
Lesen des Redo-Protokolls zum erneuten Ausführen oder Rückgängigmachen der einen oder mehreren Änderung(en), die mit den Graphendaten (115) zwischen dem ersten Mal der Transaktion und dem zweiten Mal der aktuellen Version des Graphenindex durchgeführt worden ist/sind.

14. Computerprogrammprodukt, das insbesondere als nicht-flüchtiges, computerlesbares Medium ausgeführt ist, welches Anweisungen umfasst, die, wenn sie durch mindestens einen Datenprozessor ausgeführt werden, zu Vorgängen gemäß einem Verfahren nach einem der vorhergehenden Ansprüche 8 bis 13 führen.

## Revendications

1. Un système comprenant :
au moins un processeur de données ; et
au moins une mémoire stockant des instructions qui, lorsqu'elles sont exécutées par ledit au moins un processeur de données, donnent lieu à des opérations comprenant le fait de :
générer, sur la base d'au moins une ou plusieurs tables de sommets et tables d'arêtes d'une base de données (110), un index de graphe, sachant que la base de données (110) comprend une base de données relationnelle qui stocke des données de graphe (115) desdites une ou plusieurs tables de sommets et tables d'arêtes,
en réponse à une transaction opérant sur les données de graphe (115) stockées dans la base de données (110), accéder (404) à un cache (140) stockant l'index de graphe, sachant que l'index de graphe correspond aux données de graphe (115) ;
en réponse à la détection d'un échec de cache ou encore cache-miss (*cache miss*), mettre à jour (408) l'index de graphe au moins en rejouant ou en rembobinant une ou plusieurs modifications apportées aux données de graphe (115) par une ou plusieurs autres transactions entre un premier instant de la transaction et un deuxième instant d'une version courante de l'index de graphe dans le cache (140),
sachant que, pour la transaction, l'index de graphe mis à jour inclut des sommets et/ou des arêtes qui ont été insérés avant le premier instant par la ou les autres transactions et qui ne sont supprimés par une transaction qu'à partir d'un instant postérieur au premier instant,
sachant que l'index de graphe mis à jour exclut des sommets et/ou des arêtes qui ont été supprimés avant le premier instant et/ou insérés après le premier instant par la ou les autres transactions, de manière que la transaction dispose d'une vue cohérente des données stockées dans la base de données (110) conformément aux règles d'atomicité, de cohérence, d'isolation et de durabilité imposées par la base de données (110) ; et de
exécuter (410), sur la base au moins de l'index de graphe mis à jour, la transaction.

2. Le système d'après la revendication 1, sachant que l'exécution de la transaction inclut l'exécution, sur la base au moins de l'index de graphe mis à jour, d'un algorithme de traitement de graphe comprenant un ou plusieurs parmi : sous-graphe, graphe inverse, degré entrant, degré sortant, arêtes entrantes, arêtes sortantes, voisins, est-atteignable, chemin le plus court, chemin le plus court d'un à tous, k plus courts chemins, composantes fortement connexes, parcours en profondeur d'abord, ou parcours en largeur d'abord.

3. Le système d'après l'une quelconque des revendications précédentes, sachant que l'index de graphe comprend une structure d'adjacence identifiant un premier sommet comme étant adjacent à un deuxième sommet sur la base au moins du fait que le premier sommet est relié au deuxième sommet par un ou plusieurs arêtes.

4. Le système d'après l'une quelconque des revendications précédentes, sachant que la ou les autres transactions ont modifié les données de graphe (115) au moins en insérant un sommet, en supprimant un sommet, en insérant une arête et/ou en supprimant une arête, et/ou
sachant que le cache-miss est déclenché par une modification des données de graphe (115) stockées dans la base de données (110).

5. Le système d'après l'une quelconque des revendications précédentes, sachant que les opérations comprennent en outre le fait de :
exécuter un contrôle de concurrence multiversion (*multi-version concurrency control* - MVCC) afin de suivre une pluralité de transactions modifiant les données de graphe (115) stockées dans la base de données (110).

6. Le système d'après l'une quelconque des revendications précédentes, sachant que les opérations comprennent en outre le fait de :
maintenir un journal de reprise (*redo log*) suivant une pluralité de modifications apportées aux données de graphe (115) stockées dans la base de données (110) ; et de
lire le journal de reprise afin de rejouer ou de rembobiner la ou les modifications apportées aux données de graphe (115) entre le premier instant de la transaction et le deuxième instant de la version courante de l'index de graphe.

7. Le système d'après l'une quelconque des revendications précédentes, sachant que la base de données (110) comprend un magasin de documents, et/ou
sachant que l'index de graphe est mis à jour sans reconstruire l'index de graphe dans son intégralité, et/ou
sachant que la mise à jour de l'index de graphe inclut en outre le remplacement de la version courante de l'index de graphe dans le cache (140) par l'index de graphe mis à jour.

8. Un procédé mis en œuvre par ordinateur, comprenant le fait de :
générer, sur la base d'au moins une ou plusieurs tables de sommets et tables d'arêtes d'une base de données (110), un index de graphe, sachant que la base de données (110) comprend une base de données relationnelle qui stocke des données de graphe (115) desdites une ou plusieurs tables de sommets et tables d'arêtes,
en réponse à une transaction opérant sur les données de graphe (115) stockées dans la base de données (110), accéder (404) à un cache (140) stockant l'index de graphe, sachant que l'index de graphe correspond aux données de graphe (115) ;
en réponse à la détection d'un échec de cache ou encore cache-miss (*cache miss*), mettre à jour (408) l'index de graphe au moins en rejouant ou en rembobinant une ou plusieurs modifications apportées aux données de graphe (115) par une ou plusieurs autres transactions entre un premier instant de la transaction et un deuxième instant d'une version courante de l'index de graphe dans le cache (140),
sachant que, pour la transaction, l'index de graphe mis à jour inclut des sommets et/ou des arêtes qui ont été insérés avant le premier instant par la ou les autres transactions et qui ne sont supprimés par une transaction qu'à partir d'un instant postérieur au premier instant,
sachant que l'index de graphe mis à jour exclut des sommets et/ou des arêtes qui ont été supprimés avant le premier instant et/ou insérés après le premier instant par la ou les autres transactions, de manière que la transaction dispose d'une vue cohérente des données stockées dans la base de données (110) conformément aux règles d'atomicité, de cohérence, d'isolation et de durabilité imposées par la base de données (110) ; et de
exécuter (410), sur la base au moins de l'index de graphe mis à jour, la transaction.

9. Le procédé d'après la revendication 8, sachant que l'exécution de la transaction inclut l'exécution, sur la base au moins de l'index de graphe mis à jour, d'un algorithme de traitement de graphe comprenant un ou plusieurs parmi : sous-graphe, graphe inverse, degré entrant, degré sortant, arêtes entrantes, arêtes sortantes, voisins, est-atteignable, chemin le plus court, chemin le plus court d'un à tous, k plus courts chemins, composantes fortement connexes, parcours en profondeur d'abord, ou parcours en largeur d'abord.

10. Le procédé d'après la revendication 8 ou 9, sachant que l'index de graphe comprend une structure d'adjacence identifiant un premier sommet comme étant adjacent à un deuxième sommet sur la base au moins du fait que le premier sommet est relié au deuxième sommet par un ou plusieurs arêtes.

11. Le procédé d'après l'une quelconque des revendications de 8 à 10 précédentes, sachant que la ou les autres transactions ont modifié les données de graphe (115) au moins en insérant un sommet, en supprimant un sommet, en insérant une arête et/ou en supprimant une arête, et/ou
sachant que le cache-miss est déclenché par une modification des données de graphe (115) stockées dans la base de données (110).

12. Le procédé d'après l'une quelconque des revendications de 8 à 11 précédentes, comprenant en outre le fait de :
exécuter un contrôle de concurrence multiversion (*multi-version concurrency control* - MVCC) afin de suivre une pluralité de transactions modifiant les données de graphe (115) stockées dans la base de données (110).

13. Le procédé d'après l'une quelconque des revendications de 8 à 12 précédentes, comprenant en outre le fait de :
maintenir un journal de reprise (*redo log*) suivant une pluralité de modifications apportées aux données de graphe (115) stockées dans la base de données (110) ; et de
lire le journal de reprise afin de rejouer ou de rembobiner la ou les modifications apportées aux données de graphe (115) entre le premier instant de la transaction et le deuxième instant de la version courante de l'index de graphe.

14. Un produit programme d'ordinateur, notamment matérialisé sous forme d'un support non transitoire lisible par ordinateur, comprenant des instructions qui, lorsqu'elles sont exécutées par au moins un processeur de données, donnent lieu à des opérations conformes à un procédé d'après l'une quelconque des revendications précédentes de 8 à 13.
